# EUROPEAN PATENT APPLICATION

(11) **EP 4 513 652 A1**
(43) Date of publication of application: **26.02.2025**
(21) Application number: 22942112.8
(22) Date of filing: 20.05.2022
(51) Int. Cl.: H01M 50/409

(54) **SEPARATOR AND PREPARATION METHOD THEREFOR, SECONDARY BATTERY CONTAINING SEPARATOR, AND ELECTRICAL DEVICE**

(71) Applicant: Contemporary Amperex Technology Co., Limited, Ningde, Fujian 352100 (CN)
(72) Inventor: FAN, Yulei, Ningde, Fujian 352100 (CN); WANG, Yiheng, Ningde, Fujian 352100 (CN); GE, Xiaoming, Ningde, Fujian 352100 (CN); OUYANG, Chuying, Ningde, Fujian 352100 (CN)
(74) Representative: Gong, Jinping
(86) International application number: PCT/CN2022/094021
(87) International publication number: WO 2023/221072

(57) **Abstract**

The present application relates to a separator, comprising: a first porous base film; a second porous base film; and an intermediate layer arranged between the first porous base film and the second porous base film, wherein the intermediate layer comprises an inorganic phase and an organic phase into which the inorganic phase is embedded, the inorganic phase contains an inorganic particle, the organic phase connects the first porous base film with the second porous base film, and the organic phase contains a base film material and does not contain a binder. The present application further relates to a secondary battery comprising the separator, a power consuming device comprising the secondary battery, and a method for preparing the separator.

## Description

### Technical Field

The present application belongs to the technical field of secondary batteries, and in particular relates to a separator, a preparation method therefor, a secondary battery containing same, and a power consuming device.

### Background Art

Secondary batteries are widely used in various consumer electronic products and electric vehicles due to their outstanding features, such as a light weight, no pollution and no memory effect.

With the continuous development in the new energy industry, higher requirements for the use of secondary batteries have been proposed by costumers. For example, the energy density or capacity of secondary batteries is designed to be higher and higher; however, the increase in the energy density or capacity of the battery is often detrimental to balancing a dynamic performance, electrochemical performance, or safety performance, etc.

Therefore, it is a key challenge in the field of battery design to create batteries with both high capacity performance and high safety performance.

### Summary of the Invention

In view of the technical problems mentioned in the background art, the present application provides a separator, which aims to enable a secondary battery comprising the separator to have a relatively good capacity performance and safety performance.

In order to achieve the above object, in a first aspect, the present application provides a separator, comprising: a first porous base film;
a second porous base film; and
an intermediate layer arranged between the first porous base film and the second porous base film, wherein the intermediate layer comprises an inorganic phase and an organic phase into which the inorganic phase is embedded, the inorganic phase contains an inorganic particle, the organic phase connects the first porous base film with the second porous base film, and the organic phase contains a base film material and does not contain a binder.

Compared with the prior art, the present application comprises at least the following beneficial effects:
The intermediate layer of the separator of the present application comprises the inorganic phase and the organic phase into which the inorganic phase is embedded, the first porous base film and the second porous base film are connected by means of the organic phase, such that the layers of the separator have a good bonding therebetween, and the compounding of the inorganic particle and the porous base films may be realized without adding a binder. On the one hand, the layers of the separator have a relatively high bonding therebetween, such that the thermal stability of the separator may be improved. On the other hand, the added inorganic particle may improve the wettability with an electrolyte solution, improve the thermal shrinkage of the separator, further absorb an impurity ion in the electrolyte solution, be subjected to a redox reaction with a lithium dendrite or a sodium dendrite, and then consume the lithium dendrite produced by lithium precipitation or lithium deposition on a surface of a negative electrode, and thus effectively improve a safety performance of a battery. Meanwhile, compared with a method of compounding an inorganic particle by means of a binder, the separator may avoid a problem of impedance increase brought by the binder, and thus greatly reduce an impedance of a secondary battery. In addition, the inorganic particle is arranged in the intermediate layer, which may further effectively reduce the contact between the inorganic particle and a surface of an electrode, reduce an unnecessary lithium consumption, improve a coulombic efficiency, reduce a capacity loss, and thus effectively improve a capacity performance of the battery.

In the above separator, the organic phase of the intermediate layer contains a base film material and does not contain a binder. Therefore, the problems of poorer reaction kinetics such as an increased impedance brought by the binder may be avoided, and the problem that an inorganic particle cannot effectively react with a lithium dendrite or a sodium dendrite due to the fact that the binder coats the inorganic particle may be avoided. When the separator is used in a secondary battery, the impedance of the secondary battery may be greatly reduced, and the capacity performance and safety performance of the battery are effectively improved.

In any embodiment of the present application, the organic phase forms a continuous phase with a material of the first porous base film and/or a material of the second porous base film; and
optionally, the organic phase penetrates the inorganic phase in the thickness direction of the intermediate layer. Therefore, the bonding between the layers of the separator may be further improved, and thus the thermal stability of the separator may be improved.

In any embodiment of the present application, the inorganic particle is selected from at least one of an Al oxide, an Al nitride, an Al fluoride, an Si oxide, an Si nitride, an Si fluoride, an Fe oxide, an Fe nitride, an Fe fluoride, an Fe oxysalt, a Ti oxide, a Ti nitride, a Ti fluoride, a Co oxide, a Co nitride, a Co fluoride, an Ni oxide, an Ni nitride, an Ni fluoride, an Mn oxide, an Mn nitride, an Mn fluoride, an Sn oxide, an Sn nitride, an Sn fluoride, and ZnO.

In any embodiment of the present application, the inorganic particle is capable of being subjected to a redox reaction;
optionally, the inorganic particle is selected from at least one of Si, an Si oxide, SnO₂, ZnO, an Fe oxide, an Fe oxysalt, NiO, CuO, and TiO₂; and
optionally, the inorganic particle is selected from at least one of SiO₂, Si, SiO, SnO₂, ZnO, Fe₂O₃, NiO, CuO, TiO₂, and FePO₄.

In any embodiment of the present application, the inorganic particle comprises a hydroxyl group and/or a carboxyl group.

In any embodiment of the present application, the inorganic particle has a conductivity of ≤ 1 × 10⁻¹ mS/cm, optionally < 1 × 10⁻⁵ mS/cm.

In any embodiment of the present application, a thickness of the intermediate layer is 8%-90% of a total thickness of the separator, optionally 9%-50%.

In any embodiment of the present application, the intermediate layer has a thickness of 0.5-10 µm, optionally 2-7 µm;
and/or the first porous base film has a thickness of 4-20 µm, optionally 7-12 µm;
and/or the second porous base film has a thickness of 4-20 µm, optionally 7-12 µm.

In any embodiment of the present application, the inorganic particle has a Dv50 particle size greater than an average pore size of the first porous base film and/or an average pore size of the second porous base film.

In any embodiment of the present application, the Dv50 particle size of the inorganic particle is 105%-1,000% of the average pore size of the first porous base film and the second porous base film, optionally 105%-600%. In any embodiment of the present application, the Dv50 particle size of the inorganic particle is ≥ 100 nm, optionally 100 nm-5 µm, preferably 200 nm-2 µm;
and/or the average pore size of the first porous base film and the second porous base film is ≤ 150 nm, optionally 10-200 nm, preferably 10-100 nm.

When the Dv50 particle size of the inorganic particle is controlled within the given range, it is helpful to improve the bonding between the layers of the separator and the wettability with an electrolyte solution, thereby further improving the capacity performance of the battery.

In any embodiment of the present application, the intermediate layer consists of the inorganic phase and the organic phase; and/or
the inorganic phase consists of the inorganic particle; and/or
the organic phase consists of the base film material.

In any embodiment of the present application, a material of the first porous base film, a material of the second porous base film, and the base film material are each independently selected from at least one of polyethylene, polypropylene, polyvinylidene fluoride, aramid, polyethylene terephthalate, polytetrafluoroethylene, polyacrylonitrile, polyimide, polyamide, polyester, and natural fiber; and
optionally, the base film material is the same as or different from the material of the first porous base film and/or the material of the second porous base film.

In any embodiment of the present application, the inorganic particle has a Dv50 particle size greater than an average pore size of the first porous base film and/or an average pore size of the second porous base film.

In a second aspect, the present application provides a method for preparing a separator, comprising the following steps:
providing a first porous base film and a second base film;
providing a coating slurry comprising an inorganic particle and not comprising a binder;
arranging the coating slurry on one surface of the first base film to obtain a semi-finished product; and
thermal compounding the semi-finished product and the second base film by means of the surface on which the coating slurry is arranged, to obtain the separator.

In the second aspect, the present application further provides another method for preparing a separator, comprising the following steps:
respectively using a first precursor material and a second precursor material to form a first casted base film and a second casted base film, wherein the first precursor material and the second precursor material contain a pore-forming agent; and
stacking the first casted base film and the second casted base film, arranging an inorganic particle between the first casted base film and the second casted base film, then compounding the first casted base film and the second casted base film by means of hot pressing, and removing the pore-forming agent to form a first porous base film, a second porous base film, and an intermediate layer so as to obtain the separator.

In a third aspect, the present application provides a secondary battery, comprising the separator according to the first aspect of the present application or the separator prepared by the method according to the second aspect of the present application.

In a fourth aspect, the present application provides a power consuming device, comprising the secondary battery according to the third aspect of the present application.

### Brief Description of the Drawings

In order to illustrate the technical solutions of the present application more clearly, the drawings used in the present application will be described briefly below. Apparently, the drawings described below are merely some embodiments of the present application, and those of ordinary skill in the art may derive other drawings from these drawings without creative efforts.
Fig. 1 is a cross-sectional structural schematic diagram of an embodiment of a separator of the present application.
Fig. 2 is a scanning electron microscope (SEM) picture of a cross section of an embodiment of a separator of the present application.
Fig. 3 is a schematic diagram of an embodiment of a secondary battery.
Fig. 4 is an exploded view of Fig. 3.
Fig. 5 is a schematic diagram of an embodiment of a battery module.
Fig. 6 is a schematic diagram of an embodiment of a battery pack.
Fig. 7 is an exploded view of Fig. 6.
Fig. 8 is a schematic diagram of an embodiment of a device with a secondary battery as a power source.

### List of reference numerals:

1. battery pack; 2. upper box body; 3. lower box body; 4. battery module; 5. secondary battery; 51. shell body; 52. electrode assembly; 53. cover plate; 6. separator; 61. first porous base film; 62. second porous base film; 63. intermediate layer; 631. inorganic phase; and 632. organic phase.

### Detailed Description of Embodiments

The present application will be further described below in conjunction with specific embodiments. It should be understood that these specific embodiments are merely intended to illustrate the present application but not to limit the scope of the present application.

For the sake of brevity, only certain numerical ranges are specifically disclosed herein. However, any lower limit may be combined with any upper limit to form a range that is not explicitly described; and any lower limit may be combined with any other lower limit to form a range that is not explicitly specified, and any upper limit likewise may be combined with any other upper limit to form a range that is not explicitly specified. Furthermore, each individually disclosed point or single value itself may serve as a lower or upper limit in combination with any other point or single value or with other lower or upper limit to form a range that is not explicitly specified.

In the description herein, it should be noted that, unless otherwise stated, the recitation of numerical ranges by "no less than" and "no more than" include all numbers within that range including the endpoints, the recitation of "more" in the phrase "one or more" comprises two or more.

In the description herein, unless otherwise stated, the term "or" is inclusive. That is to say, the phrase "A or B" means "A, B, or both A and B". More specifically, the condition "A or B" is satisfied by any one of the following: A is true (or present) and B is false (or not present); A is false (or not present) and B is true (or present); or both A and B are true (or present). Unless otherwise stated, the terms used in the present application have the meaning well-known to a person of ordinary skill in the art. Unless otherwise stated, the values of the parameters mentioned in the present application may be measured by various measurement methods commonly used in the art (for example, may be measured according to the method illustrated in the examples of the present application).

### Secondary battery

A secondary battery, refers to a battery which can continue to be used by activating an active material by means of charging after the battery is discharged.

Generally, the secondary battery comprises a positive electrode plate, a negative electrode plate, a separator and an electrolyte. During a charge/discharge process of the battery, an active ion is intercalated and deintercalated back and forth between the positive electrode plate and the negative electrode plate. The separator is arranged between the positive electrode plate and the negative electrode plate, and functions for separation.

The electrolyte functions to conduct an ion between the positive electrode plate and the negative electrode plate.

### [Separator]

A traditional separator has a poor electrolyte solution wettability. A separator, such as polypropylene (PP) and polyethylene (PE), has a lower pore closing temperature, a poor thermal shrinkage performance, and a serious safety problem. Some techniques attempt to introduce an inorganic material into a separator by means of bonding with a binder. However, since the binder has a relatively poor ionic conductivity, the binder will obviously increase an impedance of a battery and reduce a discharge power. In addition, where lithium is continuously precipitated or a lithium dendrite has been produced in a secondary battery, the separator is easily pierced, which causes a safety problem. Some techniques apply a substance, which is capable of eliminating lithium, near a negative electrode side to consume lithium. However, this has a problem of reducing a coulombic efficiency. Moreover, there is no effective absorption mechanism for an impurity ion in an electrolyte solution, so that the impurity ion is continuously dissolved and deposited on a surface of an electrode.

The separator provided in the present application comprises: a first porous base film, a second porous base film, and an intermediate layer. The intermediate layer comprises an inorganic phase and an organic phase into which the inorganic phase is embedded, the inorganic phase contains an inorganic particle, the organic phase connects the first porous base film with the second porous base film, and the organic phase contains a base film material and does not contain a binder.

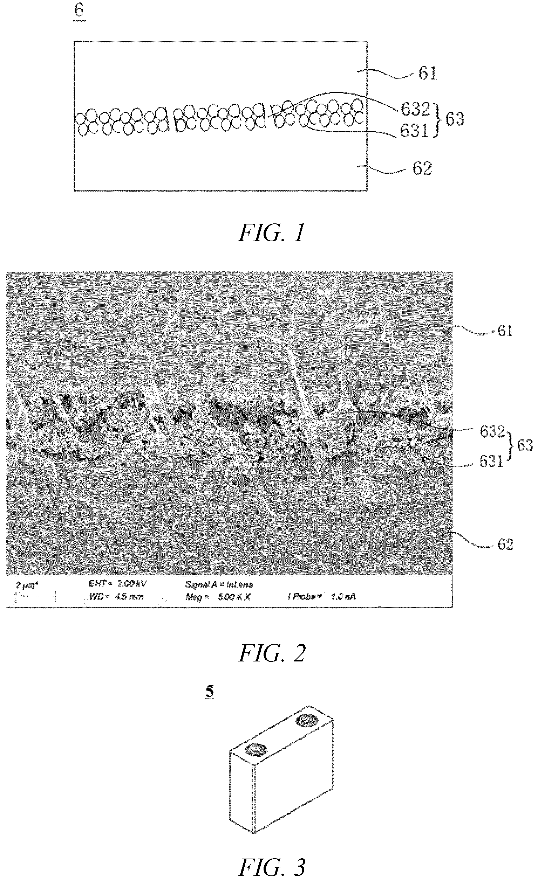

As shown in Fig. 1, a separator 6 comprises a first porous base film 61, a second porous base film 62, and an intermediate layer 63. The first porous base film 61, the second porous base film 62, and the intermediate layer 63 are stacked. The intermediate layer 63 comprises an inorganic phase 631 and an organic phase 632 into which the inorganic phase 631 is embedded, the inorganic phase 631 contains an inorganic particle, the organic phase 632 connects the first porous base film 61 with the second porous base film 62, and the organic phase 632 contains a base film material and does not contain a binder.

Fig. 2 shows a scanning electron microscope (SEM) picture of a cross section of a separator of an example of the present application. It may be seen from Fig. 2 that the separator comprises a first porous base film 61, a second porous base film 62, and an intermediate layer 63. The first porous base film 61, the second porous base film 62, and the intermediate layer 63 are stacked. The intermediate layer 62 comprises an inorganic phase 631 and an organic phase 632 into which the inorganic phase 631 is embedded, the inorganic phase 631 contains an inorganic particle, the organic phase 632 connects the first porous base film 61 with the second porous base film 62, and the organic phase contains a base film material and does not contain a binder.

Without wishing to be bound by any theory, the intermediate layer of the separator of the present application comprises the inorganic phase and the organic phase into which the inorganic phase is embedded, the first porous base film and the second porous base film are connected by means of the organic phase, such that the layers of the separator have a good bonding therebetween, and the compounding of the inorganic particle and the porous base films may be realized without adding a binder. On the one hand, the layers of the separator have a relatively high bonding therebetween, such that the thermal stability of the separator may be improved. On the other hand, the added inorganic particle may improve the wettability with an electrolyte solution, improve the thermal shrinkage of the separator, further absorb an impurity ion in the electrolyte solution, be subjected to a redox reaction with a lithium dendrite or a sodium dendrite, and then consume the lithium dendrite produced by lithium precipitation or lithium deposition on a surface of a negative electrode, and thus effectively improve a safety performance of a battery. Meanwhile, compared with a method of compounding an inorganic particle by means of a binder, the separator may avoid a problem of impedance increase brought by the binder, and thus greatly reduce an impedance of a secondary battery. In addition, the inorganic particle is arranged in the intermediate layer, which may further effectively reduce the contact between the inorganic particle and a surface of an electrode, reduce an unnecessary lithium consumption, improve a coulombic efficiency, reduce a capacity loss, and thus effectively improve a capacity performance of the battery.

In the above separator, the organic phase of the intermediate layer contains a base film material and does not contain a binder. Therefore, the problems of poorer reaction kinetics such as an increased impedance brought by the binder may be avoided, and the problem that an inorganic particle cannot effectively react with a lithium dendrite or a sodium dendrite due to the fact that the binder coats the inorganic particle may be avoided. When the separator is used in a secondary battery, the impedance of the secondary battery may be greatly reduced, and the capacity performance and safety performance of the battery are effectively improved.

In any embodiment of the present application, the organic phase forms a continuous phase with a material of the first porous base film and/or a material of the second porous base film. Therefore, the bonding between the layers of the separator may be further improved, and thus the thermal stability of the separator may be improved. Further, the organic phase penetrates the inorganic phase in the thickness direction of the intermediate layer.

In a specific example shown in Fig. 2, the intermediate layer consists of the inorganic phase and the organic phase. Further, the inorganic phase consists of the inorganic particle; and the organic phase consists of the base film material. The base film material is the same as the material of the first porous base film and the second porous base film. The intermediate layer thus has a simple composition and a low cost. It is understood that in other examples, the intermediate layer may also contain other materials, which are not limited herein.

In some embodiments, a material of the first porous base film, a material of the second porous base film, and the base film material are each independently selected from at least one of polyethylene, polypropylene, polyvinylidene fluoride, aramid, polyethylene terephthalate, polytetrafluoroethylene, polyacrylonitrile, polyimide, polyamide, polyester, and natural fiber.

In other words, the materials of the first porous base film, the second porous base film, and the base film material are the same or different.

In some examples, the base film material is the same as the material of the first porous base film and/or the second porous base film, namely the base film material is at least one of the material of the first porous base film and the material of the second porous base film. At this time, the separator may be prepared by the following method: embedding an inorganic particle into a surface layer of at least one of two adjacently arranged base films, and then performing compounding by means of hot pressing. Preferably, the separator may be prepared by the following method: embedding an inorganic particle into two opposite surface layers of the adjacent first porous base film and second porous base film, and then performing compounding by means of hot pressing.

The base film material in the thus formed intermediate layer contains the material of the first porous base film and/or the second porous base film. In other words, the base film material in the intermediate layer may form a continuous phase with the material in the first porous base film and/or the second porous base film. Therefore, the first porous base film, the intermediate layer, and the second porous base film form a whole, the bonding between the layers of the separator may be further improved, and thus the thermal stability of the separator may be improved.

Further, when the materials of the first porous base film and the second porous base film are the same, namely the material of the base film material is the same as that of the first porous base film and the second porous base film.

When the materials of the first porous base film and the second porous base film are different, the material of the base film material may be that of the first porous base film or the second porous base film, or may contain the materials of the first porous base film and the second porous base film. At this time, the base film material contains a material different from that of the first porous base film and the second porous base film, namely the material of the base film material is different from the materials of the first porous base film and the second porous base film.

By the intensive study, the present inventors have found that on the basis that the separator of the present application satisfies the design conditions, if one or more of the following conditions are also optionally satisfied, the performance of the secondary battery may be further improved.

In some embodiments, the inorganic particle is selected from at least one of an Al oxide, an Al nitride, an Al fluoride, an Si oxide, an Si nitride, an Si fluoride, an Fe oxide, an Fe nitride, an Fe fluoride, an Fe oxysalt, a Ti oxide, a Ti nitride, a Ti fluoride, a Co oxide, a Co nitride, a Co fluoride, an Ni oxide, an Ni nitride, an Ni fluoride, an Mn oxide, an Mn nitride, an Mn fluoride, an Sn oxide, an Sn nitride, an Sn fluoride, and ZnO.

Further, the inorganic particle is capable of being subjected to a redox reaction. Here, "the inorganic particle is capable of being subjected to a redox reaction" means that the inorganic particle is capable of being subjected to a redox reaction with a material comprising a sodium metal and a lithium metal, thereby effectively eliminating a sodium dendrite or a lithium dendrite.

Optionally, the inorganic particle is selected from at least one of Si, an Si oxide, SnO₂, ZnO, an Fe oxide, an Fe oxysalt, NiO, CuO, and TiO₂. These materials are all capable of being subjected to the redox reaction.

Optionally, the inorganic particle is selected from at least one of SiO₂, Si, SiO, SnO₂, ZnO, Fe₂O₃, NiO, CuO, TiO₂, and FePO₄. Further, preferably, the inorganic particle is selected from at least one of Si, SiO, SnO₂, ZnO, Fe2O₃, NiO, CuO, TiO₂, and FePO₄. When the types of the inorganic particle are preferably within the given range, it is helpful to improve the bonding between the layers of the separator and reduce an impedance of a secondary battery, thereby improving a capacity performance of the battery.

In some embodiments, the inorganic particle comprises a hydroxyl group and/or a carboxyl group. The inorganic particle may be an inorganic particle modified by a hydrophilic group such as a hydroxyl group or a carboxyl group, such that the compatibility of the separator and the electrolyte solution may be improved, a contact angle of the electrolyte solution is reduced, an affinity to the electrolyte solution is improved, and thus the wettability with the electrolyte solution is improved. The inorganic particle having a hydroxyl group may be selected from at least one of boehmite, hydroxyl-modified silicon dioxide, and the above metal oxides modified by a hydroxyl group. The inorganic particle having a hydroxyl group may be selected from at least one of carboxyl-modified silicon dioxide and the above metal oxides modified by a carboxyl group.

In some embodiments, the inorganic particle has a conductivity of ≤ 1 × 10⁻¹ mS/cm, optionally < 1 × 10⁻⁵ mS/cm. Therefore, the insulation of the separator is improved. The thickness of the layers in the present application may be tested by selecting and using a method known in the art, for example, by a step profiler test method. A measuring probe of the step profiler gently slides across a surface of a sample with a very tiny force, a micron-level or even nano-level fluctuation of the surface of the sample is amplified by millions of times through a sensor connected with the measuring probe, and then converted into an electronic signal, and the electronic signal is input into a computer software, and finally displayed in the form of digital and graphic data. In some embodiments, a thickness of the intermediate layer is 8%-90% of a total thickness of the separator, such as, 8%, 9%, 10%, 20%, 30%, 40%, 50%, 60%, 70%, 80%, and 90%, such as the thickness may be 9%-50%, 9%-35%, and 20%-40%.

In some embodiments, the intermediate layer has a thickness of 0.5-10 µm, such as 0.5 µm, 1 µm, 2 µm, 3 µm, 4 µm, 5 µm, 6 µm, 7 µm, 8 µm, 9 µm, and 10 µm, and such as the thickness may be 0.5-8 µm, 0.8-8 µm, 1-8 µm, 2-8 µm, 2-7 µm, and 0.5-5 µm.

In some embodiments, the first porous base film has a thickness of 4-20 µm, such as 4 µm, 5 µm, 6 µm, 7 µm, 8 µm, 10 µm, 12 µm, 14 µm, 16 µm, 18 µm, and 20 µm, and such as the thickness may be 4-12 µm, and 7-12 µm.

In some embodiments, the second porous base film has a thickness of 4-20 µm, such as 4 µm, 5 µm, 6 µm, 7 µm, 8 µm, 10 µm, 12 µm, 14 µm, 16 µm, 18 µm, and 20 µm, and such as the thickness may be 4-12 µm, and 7-12 µm.

A volume average particle size Dv50 of the inorganic particle has a meaning well-known in the art and may be tested by a method known in the art, for example, a laser particle size analyzer (e.g. Malvern Master Size 3000). The Dv50 represents the corresponding particle size when the cumulative volume distribution percentage of the inorganic particle reaches 50%.

An average pore size has a meaning well-known in the art, and may be measured by a method known in the art. In addition, the average pore size is determined by the following method: a surface of a material is magnified by means of a microphotograph or the like, the number of pores per inch (25.4 mm) is calculated as the number of cells, and then the average pore size is calculated by the following equation: average pore size = 25.4 mm/cell number.

In some embodiments, the inorganic particle has a Dv50 particle size greater than an average pore size of the first porous base film and/or an average pore size of the second porous base film. Therefore, the inorganic particle may be reduced or avoided from being filled into the pores of the first porous base film and/or the second porous base film as much as possible, and then an ion permeability of the separator is not influenced so as to maintain a better function of the separator in maintaining an electrolyte solution.

Further, the Dv50 particle size of the inorganic particle is 105%-1,000% of the average pore size of the first porous base film and the second porous base film, optionally 105%-600%.

Further, the Dv50 particle size of the inorganic particle is ≥ 100 nm, optionally 100 nm-5 µm, preferably 200 nm-2 µm, and 200 nm-1 µm, such as the Dv50 particle size may be 200 nm, 300 nm, 400 nm, 450 nm, 500 nm, 600 nm, 700 nm, 800 nm, 900 nm, 1 µm, 1.5 µm, and 2 µm. When the Dv50 particle size of the inorganic particle is controlled within the given range, it is helpful to improve the bonding between the layers of the separator and the wettability with an electrolyte solution, thereby further improving the capacity performance of the battery. Further, the inorganic particle has a Dv50 particle size of 300-800 nm. Within the given range, the separator may keep an alternating current impedance of the secondary battery at a relatively low level on the basis of obtaining a relatively good film layer bonding.

Further, the average pore size of the first porous base film and the average pore size of the second porous base film are both ≤ 150 nm, optionally 10-200 nm, preferably 10-100 nm.

Porosity is defined by the following equation: porosity = (1 - (mass of porous material [g]/(volume of porous material [cm3] × material density))) × 100[%].

A test method of porosity is as follows:
pressure data at a normal pressure and different pressures are respectively tested using a true density meter. A true volume and an apparent volume of a sample are respectively calculated according to PV = nRT. The porosity is calculated according to the formula: porosity = [V(apparent volume) - V(true volume)]/V(apparent volume).

In some embodiments, the first porous base film has a porosity of 30%-80%.

In some embodiments, the second porous base film has a porosity of 30%-80%.

The present application further provides a method for preparing the separator, comprising the following steps:
(11) providing a coating slurry comprising the inorganic particle and not comprising a binder;
(12) arranging the coating slurry on one surface of a porous base film to obtain a semi-finished product; and
(13) thermal compounding the semi-finished product and the other porous base film by means of the surface on which the coating slurry is arranged, to obtain the separator.

According to the preparation method, the coating slurry containing the inorganic particle is formed between two adjacent porous base films in a thermal compounding manner, and the two adjacent porous base films are melted under the action of the thermal compounding, such that the inorganic particle is embedded into at least one surface layer of the two adjacent porous base films, and the separator containing the first porous base film, the intermediate layer, and the second porous base film in a stacked structure is formed.

It can be understood that the material of one of the two adjacent porous base films is the same as that of the first porous base film, and the material of the other one is the same as that of the second porous base film, so as to form the first porous base film and the second porous base film in the separator.

In some embodiments, the preparation method comprises the following steps:
(11) coating an inorganic particle on one side surface of a porous base film; and
(12) attaching the other porous base film to the surface of the porous base film coated with the inorganic particle, and compounding the two porous base films by means of hot pressing.

In some examples, in step (11), the coating may be one of powder blade coating, spraying, solution coating, and high-speed powder spraying, wherein the solution coating does not contain a binder or other polymers for the purpose of uniformly dispersing the inorganic particle.

The powder blade coating and the high-speed powder spraying may directly coat the inorganic particle on the porous base film without a binder or other polymers. In some examples, the porous base film may be unwound at a certain tension and speed by means of an unwinding device, and then a coating device is arranged corresponding to the unwinding device so as to coat the continuously unwound porous base film.

In some examples, in step (11), the porous base film may be preheated before, during (namely, simultaneously), and/or after coating the inorganic particle. For example, in some examples, after the coating, the unwound porous base film is preheated by means of a first heat source, such as an oven.

In some examples, the other porous base film in step (12) may also be unwound at a certain tension and speed by means of the unwinding device. In some examples, in step (12), the porous base film may also be preheated. For example, in some examples, the other unwound porous base film is preheated by means of a second heat source, such as an oven.

It can be understood that a temperature and time of the preheating may be adjusted according to the material of the porous base film, as long as the porous base film may achieve a certain softening or melting effect, so as to facilitate a subsequent faster and better thermal compounding. Specifically, the preheating may be performed by using an infrared heat source or the like.

In some examples, in step (12), the two porous base films and the inorganic particle therebetween are subjected to hot-pressing compounding by means of a thermal compounding roller, wherein a temperature of the compounding roller (namely the temperature of the hot-pressing compounding) is set to be 70-180°C, and a pressure of the compounding roller (namely the pressure of the hot-pressing compounding) is 0.01-100 MPa. It is understood that the hot-pressing compounding in step (12) may be performed one or more times. Accordingly, in some examples, the thermal compounding roller may be one or more. If a plurality of thermal compounding rollers are used, the temperature of each compounding roller is set to be 70-180°C, and the pressure of the compounding roller (namely the pressure of the hot-pressing compounding) is 0.01-100 MPa. In some examples, the hot-pressing compounding has a rolling speed of 0.1-5 m/min.

In some examples, the step of the hot-pressing compounding may further comprise a winding step, for example, the prepared separator product is wound by means of a winding device.

The porous base films and the inorganic particle are commercially available.

The present application further provides a method for preparing another embodiment of the separator, comprising the following steps:
(21) respectively using a first precursor material and a second precursor material to form a first casted base film and a second casted base film, wherein the first precursor material and the second precursor material contain a pore-forming agent; and
(22) stacking the first casted base film and the second casted base film, arranging the inorganic particle between the first casted base film and the second casted base film, then compounding the first casted base film and the second casted base film by means of hot pressing, and removing the pore-forming agent to form the first porous base film, the intermediate layer, and the second porous base film so as to obtain the separator.

The preparation method skillfully combines the pore-forming of the base film and the compounding of the inorganic particle, and comprises firstly forming the compact first casted base film and second casted base film by means of step (1), then stacking the first casted base film, the inorganic particle, and the second casted base film, and realizing the compounding of the separator by means of hot-pressing compounding, and then removing the pore-forming agent, such that the first casted base film and the second casted base film form a first porous base film and a second porous base film with a porous structure.

In some embodiments, in step (21), the first precursor material and the second precursor material comprise a precursor material correspondingly forming a film material of the following material: one or more of polyethylene, polypropylene, polyvinylidene fluoride, aramid, polyethylene terephthalate, polytetrafluoroethylene, polyacrylonitrile, polyimide, polyamide, polyester, and natural fiber.

In some embodiments, the first precursor material and/or the second precursor material may further contain a thickening agent.

In some embodiments, the inorganic particle is arranged between the first casted base film and the second casted base film in step (22) by using a method similar to steps (11) to (12), which is not described in detail here.

In some embodiments, in step (22), the pressure of the hot-pressing compounding is 0.01-100 MPa, and the temperature is 70-180°C. Further, the temperature of the hot-pressing compounding in step (22) may be 80-180°C.

In some examples, the hot-pressing compounding has a rolling speed of 0.1-5 m/min.

In some embodiments, removing the pore-forming agent in step (22) may be performed by extraction. If the first precursor material and/or the second precursor material contains a thickening agent, the thickening agent may also be extracted out by an extraction step.

In some embodiments, before the step of removing the pore-forming agent in step (22), a step of stretching a film material after the hot-pressing compounding is further comprised. Specifically, the stretching may be performed according to porosity and strength requirements of the prepared separator. Further, the stretching may be one or more of bi-directional asynchronous stretching and bi-directional synchronous stretching.

In some examples, the step of the hot-pressing compounding may further comprise a winding step, for example, the prepared separator product is wound by means of a winding device.

The step of the hot-pressing compounding may further comprise a winding step, for example, the prepared separator product is wound by means of a winding device.

### [Positive electrode plate]

In a secondary battery, a positive electrode plate generally comprises a positive electrode current collector and a positive electrode film layer disposed on the positive electrode current collector, wherein the positive electrode film layer comprises a positive electrode active material.

The positive electrode current collector may be a conventional metal foil or a composite current collector (for example, a composite current collector may be formed by arranging a metal material on a polymer substrate). As an example, the positive electrode current collector may be an aluminum foil.

The specific types of the positive electrode active material are not limited, and an active material known in the art that may be used for a positive electrode of a secondary battery may be used, and may be selected by those skilled in the art according to actual requirements.

As an example, the positive electrode active material may include, but is not limited to, one or more of a lithium transition metal oxide, a lithium-containing phosphate with an olivine structure and a respective modified compound thereof. An example of the lithium transition metal oxide may include, but is not limited to, one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and a respective modified compound thereof. An example of the lithium-containing phosphate with an olivine structure may include, but is not limited to, one or more of lithium iron phosphate, a lithium iron phosphate-carbon composite, lithium manganese phosphate, a lithium manganese phosphate-carbon composite, lithium iron manganese phosphate, a lithium iron manganese phosphate-carbon composite, and a modified compound thereof. These materials are all commercially available.

In some embodiments, the modified compounds of these materials may be from a doping modification and/or surface coating modification of the materials.

The positive electrode film layer typically further optionally comprises a binder, a conductive agent, and other optional auxiliary agents.

As an example, the conductive agent may be one or more of superconducting carbon, acetylene black, carbon black, Ketjen black, carbon dots, carbon nanotubes, Super P (SP), graphene, and carbon nanofibers.

As an example, the bonder can be one or more of a styrene-butadiene rubber (SBR), a water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA) and polyvinyl butyral (PVB).

### [Negative electrode plate]

In a secondary battery, a negative electrode plate generally comprises a negative electrode current collector and a negative electrode film layer arranged on the negative electrode current collector, wherein the negative electrode film layer comprises a negative electrode active material.

The negative electrode current collector may be a conventional metal foil or a composite current collector (for example, a composite current collector may be formed by arranging a metal material on a polymer substrate). As an example, the negative electrode current collector may be a copper foil.

The specific types of the negative electrode active material are not limited, and an active material known in the art that may be used for the negative electrode of a secondary battery may be used and may be selected by a person skilled in the art according to actual requirements. As an example, the negative electrode active material may include, but is not limited to, one or more of synthetic graphite, natural graphite, hard carbon, soft carbon, a silicon-based material and a tin-based material. The silicon-based material may be selected from one or more of elemental silicon, a silicon oxide compound (for example, silicon (II) oxide), a silicon-carbon composite, a silicon-nitrogen composite, and a silicon alloy. The tin-based material may be selected from one or more of elemental tin, a tin oxide compound, and a tin alloy. These materials are all commercially available.

In some embodiments, in order to further improve the energy density of the battery, the negative electrode active material comprises a silicon-based material.

The negative electrode film layer generally also optionally comprises a binder, a conductive agent and other optional auxiliary agents.

As an example, the conductive agent may be one or more of superconducting carbon, acetylene black, carbon black, Ketjen black, carbon dots, carbon nanotubes, graphene and carbon nanofibers.

As an example, the binder may be one or more of styrene-butadiene rubber (SBR), a water-based acrylic resin, polyvinylidene fluoride (PVDF), polytetrafluoroethylene (PTFE), an ethylene-vinyl acetate copolymer (EVA), polyvinyl alcohol (PVA), and polyvinyl butyral (PVB).

As an example, other optional auxiliary agents may be a thickening and dispersing agent (for example, carboxymethylcellulose sodium, CMC-Na), a PTC thermistor material, etc.

### [Electrolyte solution]

The secondary battery may comprise an electrolyte solution, wherein the electrolyte solution functions for an ionic conduction between the positive electrode and the negative electrode. The electrolyte solution may comprise an electrolyte salt and a solvent.

As an example, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO₂F₂), lithium bisoxalatodifluorophosphate (LiDFOP), and lithium tetrafluorooxalate phosphate (LiTFOP).

As an example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, the electrolyte solution further comprises an additive. For example, the additive may comprise a negative electrode film-forming additive, also a positive electrode film-forming additive, and also an additive that may improve a certain performance of a battery, such as an additive to improve an overcharge performance of the battery, an additive to improve a high temperature performance of the battery, and an additive to improve a low temperature performance of the battery, etc.

In some embodiments, the secondary battery of the present application is a lithium-ion secondary battery.

The secondary battery may be prepared according to a conventional method in the art, for example, by winding (or stacking) a positive electrode plate, a separator, and a negative electrode plate in sequence, such that the separator is arranged between the positive electrode plate and the negative electrode plate to function for separation, to obtain a battery cell, placing the battery cell into an outer package, and injecting an electrolyte solution and sealing same, to obtain a secondary battery.

It is understood that the secondary battery of the present application may also be a button battery, in addition to the wound or stacked battery. The separator of the present application has a wide range of applications, which are not limited to the secondary battery exemplified above.

In the examples of the present application, the shape of the secondary battery is not particularly limited, which may be a cylindrical shape, a square shape or any other shapes. Fig. 3 shows a secondary battery 5 with a square structure as an example.

In some examples, the secondary battery may comprise an outer package. The outer package is used for packaging the positive electrode plate, the negative electrode plate, and the electrolyte solution.

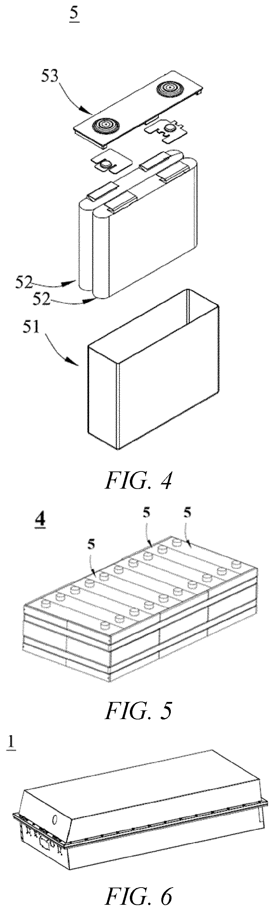

In some examples, referring to Fig. 4, the outer package may comprise a shell body 51 and a cover plate 53. Herein, the shell body 51 may comprise a bottom plate and side plates connected to the bottom plate, and the bottom plate and the side plates enclose to form an accommodating cavity. The shell body 51 has an opening in communication with the accommodating cavity, and the cover plate 53 may cover the opening to close the accommodating cavity.

The positive electrode plate, the negative electrode plate, and the separator may be subjected to a winding process or a stacking process to form an electrode assembly 52. The electrode assembly 52 is packaged in the accommodating cavity. The electrolyte solution infiltrates the electrode assembly 52. The number of the electrode assemblies 52 contained in the secondary battery 5 may be one or more, and may be adjusted according to requirements.

In some examples, the outer package of the secondary battery may be a hard shell, for example, a hard plastic shell, an aluminum shell, a steel shell, etc. The outer package of the secondary battery may also be a soft bag, such as a pouch-type soft bag. The material of the soft bag may be a plastic, for example, comprising one or more of polypropylene (PP), polybutylene terephthalate (PBT), polybutylene succinate (PBS), etc.

In some examples, the secondary battery may be assembled into a battery module, and the number of the secondary batteries contained in the battery module may be multiple, and the specific number may be adjusted according to the application and capacity of the battery module.

Fig. 5 shows a battery module 4 as an example. In the battery module 4, a plurality of secondary batteries 5 may be arranged sequentially in a length direction of the battery module 4. Apparently, the secondary batteries may also be arranged in any other manner. Furthermore, the plurality of secondary batteries 5 may be fixed by fasteners.

Optionally, the battery module 4 may also comprise an outer shell with an accommodating space, and a plurality of secondary batteries 5 are accommodated in the accommodating space.

In some examples, the battery module may also be assembled into a battery pack, and the number of the battery modules contained in the battery pack may be adjusted according to the application and capacity of the battery pack.

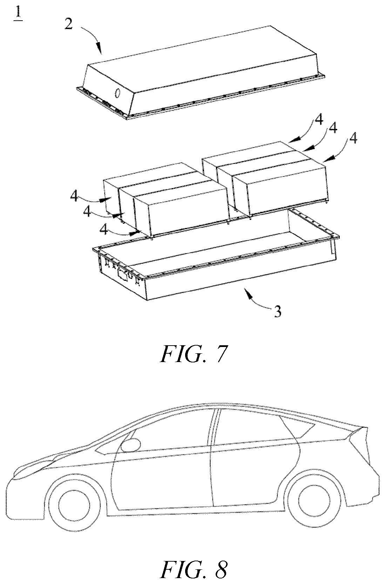

Fig. 6 and Fig. 7 show a battery pack 1 as an example. The battery pack 1 may comprise a battery box and a plurality of battery modules 4 arranged in the battery box. The battery box comprises an upper box body 2 and a lower box body 3, wherein the upper box body 2 may cover the lower box body 3 to form a closed space for accommodating the battery modules 4. A plurality of the battery modules 4 may be arranged in the battery box in any manner.

### [Power Consuming Device]

The present application further provides a power consuming device which comprises at least one of the secondary battery, the battery module, or the battery pack. The secondary battery, the battery module or the battery pack may be used as a power source of the device or as an energy storage unit of the device. The device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, a satellite, an energy storage system, etc.

The device may incorporate the secondary battery, the battery module or the battery pack according to its usage requirements.

Fig. 8 shows a device as an example. The device is a pure electric vehicle, a hybrid electric vehicle, a plug-in hybrid electric vehicle or the like. In order to meet the requirements of the device for a high power and a high energy density of a secondary battery, a battery pack or a battery module may be used.

As another example, the device may be a mobile phone, a tablet computer, a laptop computer, etc. The device is generally required to be thin and light, and may use a secondary battery as a power source.

The beneficial effects of the present application will be further described below in conjunction with examples.

### Examples

In order to make the technical problems solved by, the technical solutions and the beneficial effects of the present application clearer, further detailed description will be given below with reference to the examples and the accompanying drawings. Apparently, the described examples are merely some of, but not all of, the examples of the present application. The following description of at least one exemplary example is merely illustrative in nature and is in no way to limit the present application and use thereof. All the other examples obtained by those of ordinary skill in the art based on the examples of the present application without any creative effort shall fall within the scope of protection of the present application.

Materials used in the examples of the present application are all commercially available.

### I. Preparation of separator

### Example 1:

SiO₂ particles having a Dv50 particle size of 450 nm were blade-coated onto one surface of a 12 µm first base film by means of a scraper blade to a thickness of 3 µm, and then irradiated with an infrared heat source at a temperature of 160°C for 10 min. In addition, the second base film was irradiated with an infrared heat source at a temperature of 140°C for 8 min. Then the SiO₂ particle coating was arranged between the two heated base films, and the base films were compounded by means of a thermal compounding roller at a temperature of 130°C, and at a pressure of the thermal compounding roller of 3 MPa and a speed of the thermal compounding roller of 0.3 m/min, so as to obtain a separator.

### Example 2:

SiO₂ particles having a Dv50 particle size of 450 nm were ultrasonically dispersed and prepared into a SiO2 particle aqueous dispersion with a concentration of 20wt%, then the dispersion was evenly coated onto one surface of a first base film, and then the film was dried in an oven at a temperature of 100°C for 30 min. The second base film was irradiated with an infrared heat source at a temperature of 140°C for 8 min. Then the SiO₂ particle coating was arranged between the two heated base films, and the base films were compounded by means of a thermal compounding roller at a temperature of 130°C, and at a pressure of the thermal compounding roller of 5 MPa and a speed of the thermal compounding roller of 0.3 m/min. Thus a separator was obtained, and finally wound by means of a winding device and stored.

### Example 3:

Polyethylene, a mineral oil, and 4-methylphenol were uniformly mixed according to a weight ratio of 1 : 10 : 0.005. The mixture was heated to 130°C by means of a co-extrusion system, and continuously co-extruded at a rotating speed of 200 revolutions per minute by means of a twin-screw co-extrusion system, then treated by means of a casting and cooling roller at a temperature of 80°C so as to obtain a casted base film A and a casted base film B. SiO₂ ceramic inorganic particles having a Dv50 particle size of 450 nm were uniformly coated onto one surface of the casted base film A by means of a scraper blade until a coating thickness of 3 µm. The casted base film A, the ceramic inorganic particles, and the casted base film B were thermally compounded by means of a thermal compounding roller at a temperature of 120°C, a pressure of 4 MPa, and a speed of 1.5 m/min. Then the compound base film was stretched by means of a bidirectional asynchronous stretching system, the mineral oil in the stretched compound base film was extracted with a dichloromethane solution to form a porous structure so as to obtain a separator. The separator was wound by means of a winding device. Note: The casted base film A and the casted base film B form a first base film and a second base film, respectively.

### Examples 4-16

Examples 4-16 were basically the same as example 1, except that the parameters of the first base film, the second base film, the inorganic particle and/or the intermediate layer were different, specifically as shown in Table 1 below.

### Comparative example 1

SiO₂ particles having a Dv50 particle size of 450 nm and PVDF were dissolved in N-methylpyrrolidone according to a weight ratio of 0.985 : 0.015, and prepared into a ceramic solution having a solid content (the total amount of SiO₂ particles and PVDF) of 50 wt%. The ceramic solution was sprayed onto a surface of the first base film, and the second base film was attached to the first base film with the surface coated with the ceramic solution and rolled by means of a hot roller at a temperature of 130°C, a pressure of the hot roller of 0.5 MPa, and a speed of the hot roller of 0.3 m/min, so as to obtain a separator.

The separators prepared in each example and comparative example all had a structure where a first porous base film, an intermediate layer, and a second porous base film were stacked.

Some parameters of the separators prepared in each example and comparative example were shown in Table 1 below.

A thickness of the intermediate layer was determined by a thickness of the inorganic particle. A thickness of the first base film and the second base film was that of the corresponding first porous base film and second porous base film in the separator, respectively.

### II. Preparation of button battery

A Φ18 mm lithium sheet was used as a positive electrode and a negative electrode, and has a thickness of 500 µm. An interlayer was the separator prepared in each example and comparative example. The same amount of an electrolyte solution was dropwise added in a certain sequence. A 2430 type button battery was assembled and a model of the electrolyte solution was 1 mol/L LiPF₆ + EC/DMC (a volume ratio of EC to DMC was 1 : 1).

### III. Battery performance test

1. The separators of each example and comparative example were subjected to a 180° peel force test. The test results were shown in Table 1 below.
   The test was performed according to a 180° peel force test method or test standard GB 2792-1998.
2. The separators of each example and comparative example were respectively prepared into a button battery according to the above method. Each button battery was subjected to an alternating current impedance test. The test results were shown in Table 1 below.

The prepared button battery was subjected to an alternating current impedance test by means of Solartron at a frequency of 0.01-100,000 Hz, so as to obtain alternating current impedance data. Liquid phase ionic resistance data Rs was extracted from the data.

**Table 1**

| No. | First base film | | | Second base film | | | Inorganic particle | | Thick ness of interm ediate layer | 180° peel force (N/ m) | Alterna ting current impeda nce Rs (Ω) |
|---|---|---|---|---|---|---|---|---|---|---|---|
| | Mate rial | Thickn ess | Aver age pore size | Mate rial | Thickn ess | Aver age pore size | Typ e | Dv 50 | | | |
| Example 1 | PE | 7 µm | 30 nm | PE | 7 µm | 30 nm | SiO₂ | 450 nm | 3 µm | 9.3 | 7.54 |
| Example 2 | PE | 7 µm | 30 nm | PP | 12 µm | 30 nm | SiO₂ | 450 nm | 2 µm | 8.9 | 7.67 |
| Example 3 | PP | 12 µm | 50 nm | PP | 12 µm | 50 nm | SiO₂ | 450 nm | 3 µm | 9.1 | 10.63 |
| Example 4 | PP | 7 µm | 50 nm | PP | 7 µm | 50 nm | SiO₂ | 300 nm | 3 µm | 10.3 | 8.39 |
| Example 5 | PP | 7 µm | 50 nm | PP | 7 µm | 50 nm | SiO₂ | 500 nm | 4 µm | 9.8 | 8.85 |
| Example 6 | PP | 7 µm | 50 nm | PP | 7 µm | 50 nm | SiO₂ | 800 nm | 5 µm | 9.5 | 8.39 |
| Example 7 | PP | 7 µm | 50 nm | PP | 7 µm | 50 nm | SiO₂ | 1,000 nm | 7 µm | 9.6 | 10.38 |
| Example 8 | PP | 7 µm | 50 nm | PP | 7 µm | 50 nm | SiO₂ | 1,5 00 nm | 7 µm | 9.6 | 10.41 |
| Example 9 | PP | 7 µm | 50 nm | PP | 7 µm | 50 nm | SiO₂ | 2,0 00 nm | 7 µm | 9.5 | 10.59 |
| Example 10 | PP | 7 µm | 50 nm | PP | 7 µm | 50 nm | SiO₂ | 200 nm | 3 µm | 10.4 | 10.79 |
| Example 11 | PP | 7 µm | 50 nm | PP | 7 µm | 50 nm | ZnO | 450 nm | 3 µm | 9.5 | 9.85 |
| Example 12 | PP | 7 µm | 50 nm | PP | 7 µm | 50 nm | Fe₂ O₃ | 450 nm | 3 µm | 9.6 | 9.64 |
| Example 13 | PP | 7 µm | 50 nm | PP | 7 µm | 50 nm | TiO₂ | 450 nm | 3 µm | 9.8 | 9.38 |
| Example 14 | PP | 7 µm | 50 nm | PP | 7 µm | 50 nm | SnO ₂ | 450 nm | 3 µm | 9.3 | 9.28 |
| Example 15 | PP | 7 µm | 50 nm | PP | 7 µm | 50 nm | SiO | 450 nm | 3 µm | 9.4 | 9.26 |
| Example 16 | PP | 7 µm | 50 nm | PP | 7 µm | 50 nm | Al₂ O₃ | 450 nm | 3 µm | 10 | 9.64 |
| Compara tive example 1 | PP | 12 µm | 50 nm | PP | 12 µm | 50 nm | SiO₂ | 450 nm | / | 7.3 | 13.20 |

It can be seen from each example and comparative example 1 in Table 1 that by means of arranging the intermediate layer of the example of the present invention in separators, the introduction of a binder into the intermediate layer was avoided, and the bonding between the layers of the separators was improved, and an alternating current impedance of a secondary battery was reduced, which indicated that the separators of the examples of the present invention may significantly improve the safety performance and capacity performance of the battery. In particular, by further optimizing the particle size or type of the inorganic particle and the type of the intermediate layer thickness, the bonding between the layers of the separators may be further improved, and the alternating current impedance of a secondary battery was reduced, and thus the capacity of the secondary battery may be improved.

Specifically, it can be seen from example 1 and examples 4-10 that the Dv50 particle size of the inorganic particle was 200 nm to 2 µm, which is helpful to improve the bonding between the layers of the separators and the wettability with an electrolyte solution with respect to comparative example 1, thereby further improving the capacity performance of the battery. Further, the inorganic particle has a Dv50 particle size of 300-800 nm. Within the given range, the separator may keep an alternating current impedance of the secondary battery at a relatively low level on the basis of obtaining a relatively good film layer bonding.

Described above are merely specific embodiments of the present application, and the scope of protection of the present application is not limited thereto; any equivalent modification or replacement may be readily conceived by a person skilled in the art according to the technical range of the disclosure of the present application, and shall fall within the protection scope of the present application. Therefore, the scope of protection of the present application shall be subject to the claims.

## Claims

1. A separator, comprising:
a first porous base film;
a second porous base film; and
an intermediate layer arranged between the first porous base film and the second porous base film, wherein the intermediate layer comprises an inorganic phase and an organic phase into which the inorganic phase is embedded, the inorganic phase contains an inorganic particle, the organic phase connects the first porous base film with the second porous base film, and the organic phase contains a base film material and does not contain a binder.

2. The separator of claim 1, wherein, the organic phase forms a continuous phase with a material of the first porous base film and/or a material of the second porous base film; and
optionally, the organic phase penetrates the inorganic phase in the thickness direction of the intermediate layer.

3. The separator of either of claims 1 to 2, wherein, the inorganic particle is selected from at least one of an Al oxide, an Al nitride, an Al fluoride, an Si oxide, an Si nitride, an Si fluoride, an Fe oxide, an Fe nitride, an Fe fluoride, an Fe oxysalt, a Ti oxide, a Ti nitride, a Ti fluoride, a Co oxide, a Co nitride, a Co fluoride, an Ni oxide, an Ni nitride, an Ni fluoride, an Mn oxide, an Mn nitride, an Mn fluoride, an Sn oxide, an Sn nitride, an Sn fluoride, and ZnO.

4. The separator of any one of claims 1 to 3, wherein, the inorganic particle is capable of being subjected to a redox reaction;
optionally, the inorganic particle is selected from at least one of Si, an Si oxide, SnO₂, ZnO, an Fe oxide, an Fe oxysalt, NiO, CuO, and TiO₂; and
optionally, the inorganic particle is selected from at least one of SiO₂, Si, SiO, SnO₂, ZnO, Fe₂O₃, NiO, CuO, TiO₂, and FePO₄.

5. The separator of any one of claims 1 to 4, wherein, the inorganic particle comprises a hydroxyl group and/or a carboxyl group.

6. The separator of any one of claims 1 to 5, wherein, the inorganic particle has a conductivity of ≤ 1 × 10⁻¹ mS/cm, optionally < 1 × 10⁻⁵ mS/cm.

7. The separator of any one of claims 1 to 6, wherein, a thickness of the intermediate layer is 8%-90% of a total thickness of the separator, optionally 9%-50%.

8. The separator of any one of claims 1 to 7, wherein, the intermediate layer has a thickness of 0.5-10 µm, optionally 2-7 µm;
and/or the first porous base film has a thickness of 4-20 µm, optionally 7-12 µm;
and/or the second porous base film has a thickness of 4-20 µm, optionally 7-12 µm.

9. The separator of any one of claims 1 to 8, wherein, the inorganic particle has a Dv50 particle size greater than an average pore size of the first porous base film and/or an average pore size of the second porous base film.

10. The separator of any one of claims 1 to 9, wherein, the Dv50 particle size of the inorganic particle is 105%-1,000% of the average pore size of the first porous base film and the second porous base film, optionally 105%-600%.

11. The separator of any one of claims 1 to 10, wherein, the Dv50 particle size of the inorganic particle is ≥ 100 nm, optionally 100 nm-5 µm, preferably 200 nm-2 µm;
and/or the average pore size of the first porous base film and the second porous base film is ≤ 150 nm, optionally 10-200 nm, preferably 10-100 nm.

12. The separator of any one of claims 1 to 11, wherein, the intermediate layer consists of the inorganic phase and the organic phase; and/or
the inorganic phase consists of the inorganic particle; and/or
the organic phase consists of the base film material.

13. The separator of any one of claims 1 to 12, wherein, a material of the first porous base film, a material of the second porous base film, and the base film material are each independently selected from at least one of polyethylene, polypropylene, polyvinylidene fluoride, aramid, polyethylene terephthalate, polytetrafluoroethylene, polyacrylonitrile, polyimide, polyamide, polyester, and natural fiber; and
optionally, the base film material is the same as or different from the material of the first porous base film and/or the material of the second porous base film.

14. A method for preparing a separator of any one of claims 1 to 13, comprising the following steps:
providing the first base film and the second base film;
providing a coating slurry comprising the inorganic particle and not comprising a binder;
arranging the coating slurry on one surface of the first base film to obtain a semi-finished product; and
thermal compounding the semi-finished product and the second base film by means of the surface on which the coating slurry is arranged, to obtain the separator.

15. A method for preparing a separator of any one of claims 1 to 13, comprising the following steps:
respectively using a first precursor material and a second precursor material to form a first casted base film and a second casted base film, wherein the first precursor material and the second precursor material contain a pore-forming agent; and
stacking the first casted base film and the second casted base film, arranging the inorganic particle between the first casted base film and the second casted base film, then compounding the first casted base film and the second casted base film by means of hot pressing, and removing the pore-forming agent to form the first porous base film, the second porous base film, and the intermediate layer so as to obtain the separator.

16. A secondary battery, comprising a separator of any one of claims 1 to 13, or a separator prepared by a method of either of claims 14 to 15.

17. A power consuming device, comprising a secondary battery of claim 16.
